# EUROPEAN PATENT SPECIFICATION

(11) **EP 0 515 064 B1**
(45) Date of publication and mention of the grant of the patent: **06.08.1997**
(21) Application number: 92304149.5
(22) Date of filing: 08.05.1992
(51) Int. Cl.: H04N 7/18

(54) **Information transmission controller for monitor television camera**
Nachrichtenübertragungssteuerschaltung für Überwachungsfernsehkamera
Circuit de commande de la transmission d'information pour une caméra de télévision de surveillance

(30) Priority: 23.05.1991 JP 118298/91
(43) Date of publication of application: 25.11.1992
(73) Proprietor: MATSUSHITA ELECTRIC INDUSTRIAL CO., LTD., Kadoma-shi, Osaka-fu, 571 (JP)
(72) Inventor: Itoi, Seiji, Kohoku-ku, Yokohama-shi (JP); Morishita, Tadayuki, Atsugi-shi (JP)
(74) Representative: Votier, Sidney David

(56) References cited:
- US-A- 3 832 489
- US-A- 4 507 793
- US-A- 4 980 884
- PATENT ABSTRACTS OF JAPAN vol. 14, no. 51 (E-881)30 January 1990 & JP-A-12 78 178
- PATENT ABSTRACTS OF JAPAN vol. 12, no. 89 (E-592)23 March 1988 & JP-A-62 222 789
- PATENT ABSTRACTS OF JAPAN vol. 6, no. 60 (E-102)17 April 1982 & JP-A-57 002 172

## Description

### BACKGROUND OF THE INVENTION

### FIELD OF THE INVENTION

The present invention relates to an information transmission controller for monitor television camera which is capable of communicate control data bi-directionally between a plurality of multidrop-connected information transmission controllers for television camera.

### DESCRIPTION OF THE RELATED ART

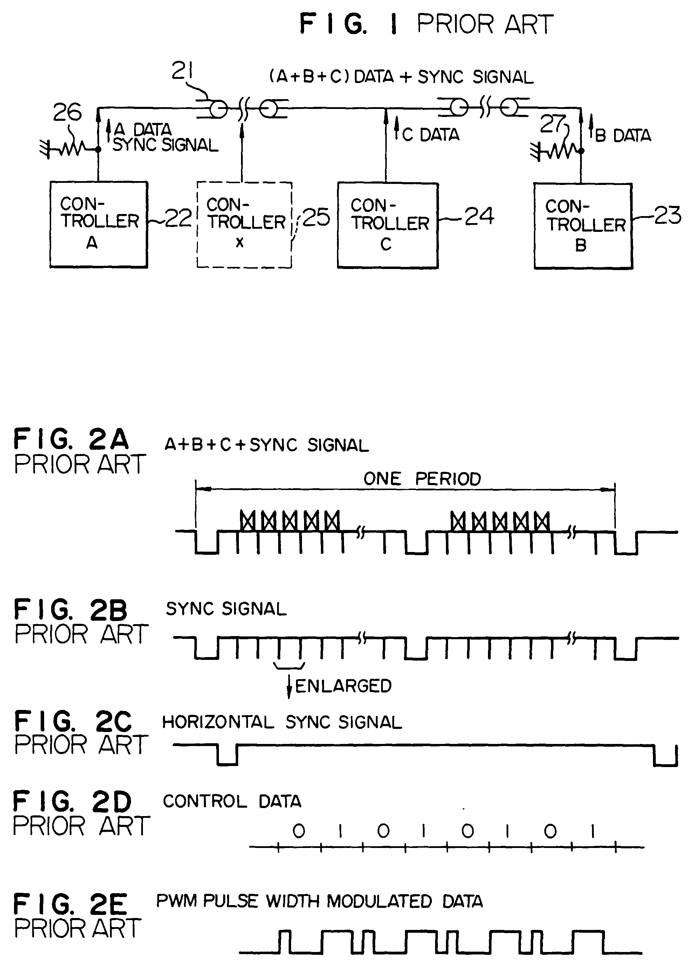

First, information transmission control for monitor television camera will be explained by use of Figs. 1 and 2. In a monitor television camera, a control system including a plurality of information transmission controllers connected in a multidrop fashion is constructed using one or two pairs of twisted pair lines or a coaxial line as a control line in order to communicate control data a full duplex or half duplex manner. Fig. 1 shows a monitor television camera in which a coaxial line is used as a control line. In Fig. 1, various control data of each of information transmission controllers such as television cameras or sequencers are communicated in a full duplex or half duplex manner between the controllers after they have superimposed as a control data signal onto the same coaxial line after pulse width modulation thereof. Therefore, each controller is provided with a pair of input circuits, output driver circuits, separate circuits, mixing circuits and erase circuits.

In Fig. 1, reference numeral 21 designates a control line which is a coaxial line for transmitting control data and a sync signal superimposed thereon. Numerals 22, 23, 24 and 25 designate information transmission controllers A, B, C and x which are connected to the control line 21. Numeral 26 designates a matching resistor, and numeral 27 designates a terminal resistor. The information transmission controller (A) 22 is provided with the matching resistor 26 to make an impedance matching with the control line 26 and outputs control data A (hereinafter referred to as A data). The information transmission controller (B) 23 is a controller placed at a terminal end and is provided with the terminal resistor 27. The information transmission controller (B) 23 outputs control data B (hereinafter referred to as B data). The information transmission controller (C) 24 arranged between the information transmission controllers (A) 22 and (B) 23 outputs control data C (hereinafter referred to as C data). The information transmission controller (x) 25 represents a plurality of information transmission controllers arranged between the information transmission controller (A) 22 and the information transmission controller (B) 23 and is the same in function and operation as the information transmission controller (C) 24. Namely, the information transmission controller C can be considered to represent the information transmission controller x.

Figs. 2A - 2E show an example of signal waveforms related to control data. More particularly, Fig. 2A represents A data, B data, C data and a sync signal superimposed (hereinafter represented as A + B + C + sync signal). This A + B + C + sync signal is transmitted by the control line 21. Fig. 2B represents only the sync signal extracted from the signal shown in Fig. 2A, and Fig. 2C represents a horizontal sync signal extracted from the sync signal shown in Fig. 2B. Fig. 2D shows control data, and Fig. 2E shows a waveform for the control data of Fig. 2D after pulse width modulation thereof. Namely, a distinction between "0" and "1" shown in Fig. 2D is represented as a difference in pulse width through conversion to a pulse width modulated signal as shown in Fig. 2E.

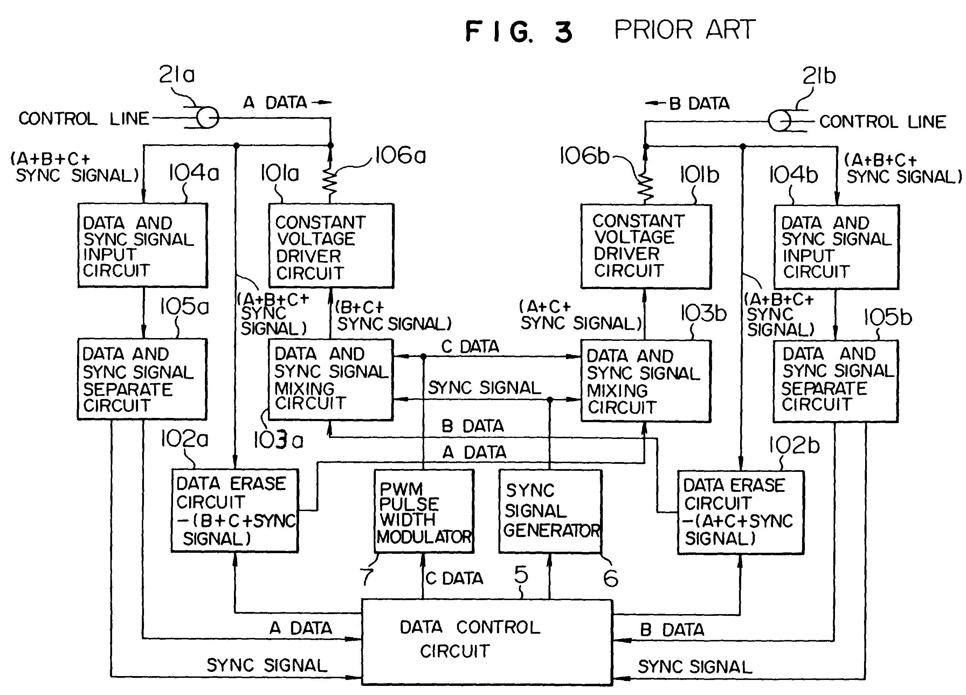

Fig. 3 is a block diagram showing the conventional construction of the information transmission controller (C) 24. The information transmission controller (C) 24 is connected to the control line 21 shown in Fig. 1. In Fig. 3, reference numeral 21a designates a control line on the side of the information transmission controller (A) 22, and numeral 21b designates a control line on the side of the information transmission controller (B) 23. Each pair of numerals 101a and 101b, 102a and 102b, 103a and 103b, 104a and 104b, or 105a and 105b designate a pair of blocks which have the same function but handle different data. More particularly, numeral 101a designates a constant voltage driver circuit which drives control data inclusive of the superimposition of data B, data C and a sync signal [hereinafter represented as (B + C + sync signal) data] by a constant voltage source, that is, a driver circuit which outputs the data signal with a low impedance, numeral 102a designates a data erase circuit which erases (B + C + sync signal) data from (A + B + C + sync signal) data, numeral 103a designates a data and sync signal mixing circuit which mixes B data, C data and a sync signal and outputs the mixed signal, numeral 104a designates a data and sync signal input circuit which receives (A + B + C + sync signal) from the control line 21a and amplifies it, numeral 105a designates a data and sync signal separate circuit which separates data A and a sync signal from the (A + B + C + sync signal) data, and numeral 106a designates a matching resistor which makes a matching between the constant voltage driver circuit 101a and the control line 21a. On the other hand, numeral 101b a constant voltage driver circuit which drives (A + C + sync signal) data by a voltage source or outputs the data signal with a low impedance, numeral 102b designates a data erase circuit which erases (A + C + sync signal) data from (A + B + C + sync signal) data, numeral 103b designates a data and sync signal mixing circuit which mixes A data, C data and a sync signal and outputs the mixed signal, numeral 104b designates a data and sync signal input circuit which receives (A + B + C + sync signal) from the control line 21b and amplifies it, numeral 105b designates a data and sync signal separate circuit which separates data B and a sync signal from the (A + B + C + sync signal) data, and numeral 106b designates a matching resistor which makes a matching between the constant voltage driver circuit 101b and the control line 21b. Numeral 5 designates a data control circuit which uses the control data A and B respectively separated by the data and sync signal separate circuits 105a and 105b for making various controls (for example, display) and transmitting C data to another information transmission controller. Numeral 6 designates a sync signal generator which generates a sync signal for control data, and numeral 7 designates a pulse width modulator which pulse width modulates the C data or the output of the data control circuit 5.

Next, explanation will be made of the operation of the conventional information transmission controller. An input signal including the mixture of A data, B data, C data and a sync signal is subjected to amplification and frequency correction by the data and sync signal input circuit 104a and is then sent to the data and sync signal separate circuit 105a. The data and sync signal separate circuit 105a separates the A data and the sync signal from the (A + B + C + sync signal) data. The data control circuit 5 uses the A data inputted from the data and sync signal separate circuit 105a to make a display or a control for the operation or function of the controller under consideration and to send, to the pulse width modulator 7, the data C which is to be transmitted to the other information transmission controller. The data and sync signal mixing circuit 103a mixes the C data modulated by the pulse width modulator 7, the B data obtained through the data erase circuit 102b and a sync signal generated by the sync signal generator 6 to produce (B + C + sync signal) data. The (B + C + sync signal) data is converted to a constant voltage source or a signal with a low impedance by the constant voltage driver circuit 101a and is then outputted through the matching resistor 106a to the control line 21a. The data erase circuit 102a erases the (B + C + sync signal) data in order to prevent oscillation from occurring in a circuit loop 102a → 103b → 101b → 102b → 103a → 101a → 102a.

An operation similar to the above operation is made by the data and sync signal input circuit 104b, the data and sync signal separate circuit 105b, the data and sync signal mixing circuit 103b and the constant voltage driver circuit 101b.

In the conventional information transmission controller mentioned above, however, when a plurality of information transmission controllers are connected in a multidrop fashion, the data erase circuit for prevention of oscillation must be provided for effecting the communication of control data in a full duplex or half duplex manner. Also, it is required that each of the data and sync signal input circuit, the constant voltage driver circuit, and so on is provided in a pair in each information transmission controller. Accordingly, there is a problem that the controller becomes large as a whole. Further, there is a problem that signal level, pulse width, phase, S/N, and so on are liable to deteriorate since the control data is processed many times.

### SUMMARY OF THE INVENTION

An object of the present invention made for solving the above problems of the conventional information transmission controller is to provide an information transmission controller for monitor television camera which can prevent the deterioration of performance of control data, thereby enabling the stabilized communication of control data in a full duplex or half duplex manner.

To attain the above object, in the present invention, a driving function of superimposing a sync signal and a control data signal onto a control line is made by a constant current driver circuit. For that purpose, an information transmission controller is provided as defined in the claims, each information transmission controller is constructed using one data separate circuit for extracting control data on a control line, one sync signal separate circuit for extracting only a sync signal, one data control circuit for adding new data in synchronism with the signal extracted by the sync signal separate circuit and on the basis of the data extracted by the data separate circuit, one pulse width modulator for modulating an output of the data control circuit into a pulse width modulated signal, and one constant current driver circuit for driving the pulse width modulated signal by a constant current source.

According to the present invention, since the control data is superimposed onto the control line by the constant current driver circuit, it becomes possible to prevent a signal from being reflected on the control line due to phase lag. Thereby, it is possible to make data communication in a full duplex or half duplex manner between a plurality of multidrop-connected controllers. Further, since the circuit construction is simplified, it is possible to prevent the deterioration of an S/N ratio or a signal level and a change in pulse width, thereby enabling the stabilized communication of control data.

### BRIEF DESCRIPTION OF THE DRAWINGS

Fig. 1 is a systematic block diagram of a monitor television camera;
Figs. 2A - 2E show the waveforms of signals included in the monitor television camera, more particularly, Fig. 2A showing the waveform of a control data signal and a sync signal superimposed, Fig. 2B showing the waveform of the sync signal, Fig. 2C showing the waveform of a horizontal sync signal, Fig. 2D showing control data in a digital data representation, and Fig. 2E showing the waveform of the control data after pulse width modulation;
Fig. 3 is a block diagram of the conventional information transmission controller for monitor television camera; and
Fig. 4 is a block diagram of an information transmission controller for monitor television camera according to an embodiment of the present invention.

### DESCRIPTION OF THE PREFERRED EMBODIMENTS

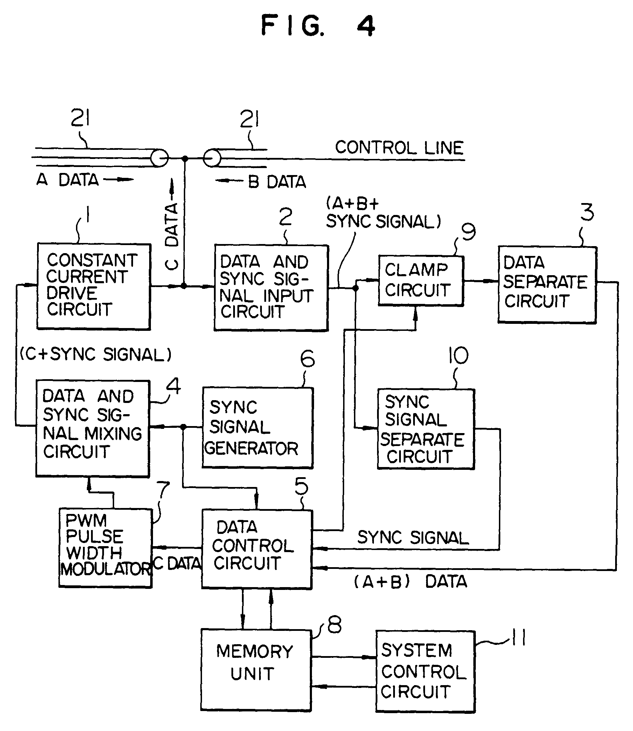

Fig. 4 shows the construction of an information transmission controller according to an embodiment of the present invention. Components in Fig. 4 having the same functions as those shown in Figs. 1 to 3 are designated by the same reference numerals as those used in Figs. 1 to 3.

In Fig. 4, reference numeral 1 designates a constant current driver circuit which outputs control data and a sync signal mixed to a control line 21 in a superimposed form. Numeral 2 designates a data and sync signal input circuit which receives and amplifies control data from another information transmission controller. Numeral 9 designates a clamp circuit which sets or adjusts the control data from the data and sync signal input circuit 2 into a preset D.C. voltage. Numeral 10 designates a sync signal separate circuit which receives an output of the data and sync signal input circuit 2 to separate a sync signal from control data. Numeral 3 designates a data separate circuit which separates control data from an output signal of the clamp circuit 9. Numeral 4 designates a data and sync signal mixing circuit which mixes control data and a sync signal. Numeral 5 designates a data control circuit which receives the sync signal from the sync signal separate circuit 10 and the control data from the data separate circuit 3 and sends the received data to a memory unit 8. Numeral 6 designates a sync signal generator which generates a sync signal for making synchronization with data of another information transmission controller. Numeral 7 designates a pulse modulation circuit which pulse width modulates new control data sent from the memory unit 8 into a signal form capable of being superimposed onto the control line. Numeral 8 designates the memory unit which temporarily stores inputted control data and so on. Numeral 11 designates a system control circuit which makes a display and a control of functional operation on the basis of data stored in the memory unit 8. The system control circuit 11 sends new data to the memory unit 8.

The operation of the information transmission controller shown in Fig. 4 will now be explained. An example of connection of the information transmission controller of the present invention used in a monitor television camera is similar to that shown in Fig. 1. In the following, it is assumed that control data transmitted on the control line 21 is (A + B + C + sync signal).

In the present embodiment, A data and B data are transmitted on the control line 21 from different directions, as shown in Fig. 4, and C data is new control data produced by the information transmission controller under consideration. In this case, (A + B + sync signal) data is received by the data and sync signal input circuit 2 and is then sent to the sync signal separate circuit and to the data separate circuit 3 through the clamp circuit 9. The data separate circuit 3 extracts A data and B data, which are control data, and sends the extracted data to the data control circuit 5. On the other hand, the sync signal separate circuit 10 extracts a sync signal and sends it to the data control circuit 5. The data control circuit 5 receives the control data A and B and the sync signal and causes the memory unit 8 to temporarily store (A + B) data. The (A + B) data is sent to the system control circuit 11 to make a display and/or the like on the basis of the data. In the case where a new control signal (or C data) is to be transmitted to another information transmission controller, the system control circuit 11 causes the memory unit 8 to temporarily store the C data. The stored C data is sent through the data control circuit 5 to the pulse width modulator 7 and is pulse width modulated by the pulse width modulator 7. The modulation is made in synchronism with a sync signal sent from the sync signal generator 6. The data and sync signal mixing circuit 4 mixes the sync signal from the sync signal generator 6 and the C data from the pulse width modulator 7. The constant current driver circuit 1 converts the inputted control data inclusive of the mixed C data and sync signal into a constant current source and sends the converted data to the control line 21.

As has been mentioned above, in the present embodiment, only control data newly generated by an information transmission controller is pulse width modulated, is replaced by a constant current source and is then sent to a control line. Therefore, it is not required that control data transmitted to the information transmission controller is replaced by a constant current source. Accordingly, the controller can be simplified. Also, though a signal inputted to the information transmission controller is separated into control data and a sync signal, a plurality of control data are sent up to a memory unit as they are. Therefore, the circuit can be simplified. Further, with the circuit system thus simplified, the deterioration of performance in the circuit system, the deterioration of a signal level and a change in pulse width can be prevented, thereby enabling the stabilized communication of control data.

## Claims

1. An information transmission controller for monitor television camera comprising:
a data separate circuit (3) for extracting control data from a signal line;
a sync signal separate circuit (10) for extracting a sync signal from said signal line;
a sync signal generator (6) for generating a new sync signal;
a data control circuit (5) receiving the sync signal extracted by said sync signal separate circuit and providing new control data in synchronism with the new sync signal generated by said sync signal generator and on the basis of the control data extracted by said data separate circuit;
a pulse width modulator (7) for pulse width modulating an output of said data control circuit;
a data and sync mixing circuit (4) for mixing said new sync signal and the modulated output of said data control circuit and
a constant current driver circuit (1) for driving an output signal of said pulse width modulator by a constant current source,
whereby the control data is extracted from the signal line and the new control data is transmitted with the new sync signal onto said signal line.

2. An information transmission controller for monitor television camera according to Claim 1 further comprising:
memory means (8) for storing said control data extracted from said signal line.

3. An information transmission controller for monitor television camera according to Claim 1, further comprising a clamp circuit (9) for adjusting a signal to be extracted into a preset D.C. voltage when the control data is extracted from said signal line.

## Patentansprüche

1. Informationsübertragungssteuereinrichtung für eine Überwachungsfernsehkamera mit:
einer Datenabtrennschaltung (3) zum Extrahieren von Steuerdaten aus einer Signalleitung;
einer Synchronsignalabtrennschaltung (10) zum Extrahieren eines Synchronsignals aus der Signalleitung;
einem Synchronsignalgenerator (6) zum Erzeugen eines neuen Synchronsignals;
einer Datensteuerschaltung (5), die das von der Synchronsignalabtrennschaltung extrahierte Synchronsignal empfängt und neue Steuerdaten synchron mit dem von dem Sychronsignalgenerator erzeugten neuen Synchronsignal und auf der Basis der von der Datenabtrennschaltung extrahierten Steuerdaten liefert;
einem Pulsweitenmodulator (7) zum Pulsweitenmodulieren eines Ausgangssignals der Datensteuerschaltung;
einer Daten- und Synchronmischschaltung (4) zum Mischen des neuen Synchronsignals und des modulierten Ausgangssignals der Datensteuerschaltung und
einer Konstantstromtreiberschaltung (1) zum Treiben eines Ausgangssignals des Pulsweitenmodulators mit einer Konstantstromquelle,
wodurch die Steuerdaten aus der Signalleitung extrahiert werden und die neuen Steuerdaten mit dem neuen Synchronsignal auf die Signalleitung übertragen werden.

2. Informationsübertragungssteuerschaltung für eine Überwachungsfernsehkamera nach Anspruch 1, ferner mit:
einer Speichereinrichtung (8) zum Speichern der aus der Signalleitung extrahierten Steuerdaten.

3. Informationsübertragungssteuereinrichtung für eine Überwachungsfemsehkamera nach Anspruch 1, ferner mit einer Halteschaltung (9) zum Einstellen eines zu extrahierenden Signals in eine voreingestellte Gleichspannung, wenn die Steuerdaten aus der Signalleitung extrahiert werden.

## Revendications

1. Dispositif de commande de transmission de l'information pour une caméra de télévision de surveillance, comprenant :
un circuit (3) de séparation de données pour extraire des données de commande à partir d'une ligne de signaux;
un circuit (10) de séparation de signal de synchronisation pour extraire un signal de synchronisation à partir de ladite ligne de signaux;
un générateur de signal de synchronisation (6) pour engendrer un nouveau signal de synchronisation;
un circuit (5) de commande de données pour recevoir le signal de synchronisation extrait par ledit circuit de séparation de signal de synchronisation et délivrer de nouvelles données de commande en synchronisme avec le nouveau signal de synchronisation engendré par ledit générateur de signal de synchronisation et sur la base des données de commande extraites par ledit circuit de séparation de données;
un modulateur (7) de largeur d'impulsion pour moduler la largeur d'impulsion d'un signal de sortie dudit circuit de commande de données;
un circuit (4) de mélange de données et de signal de synchronisation pour mélanger ledit nouveau signal de synchronisation et le signal modulé de sortie dudit circuit de commande de données; et
un circuit de commande (1) à courant constant pour commander un signal de sortie dudit modulateur de largeur d'impulsion par une source à courant constant,
d'où il résulte que les données de commande sont extraites de la ligne de signaux et les nouvelles données de commande sont transmises avec le nouveau signal de synchronisation sur ladite ligne de signaux.

2. dispositif de commande de transmission de l'information pour une caméra de télévision de surveillance selon la revendication 1, comprenant en outre:
des moyens de mémorisation (8) pour mémoriser lesdites données de commande extraites de ladite ligne de signaux.

3. Circuit de commande de transmission de l'information pour une caméra de télévision de surveillance selon la revendication 1, comprenant en outre un circuit de verrouillage (9) pour régler un signal devant être extrait sous la forme d' une tension continue préréglée, au moment où les données de commande sont extraites de ladite ligne de signaux.
